(19) Europäisches Patentamt
European Patent Office
Office européen des brevets

(11) Publication number: 0 086 448
A1

(12) # EUROPEAN PATENT APPLICATION

(21) Application number: 83101207.5

(22) Date of filing: 09.02.83

(51) Int. Cl.³: C 08 L 71/04, C 08 L 53/00, C 08 L 87/00

(30) Priority: 17.02.82 US 349604

(43) Date of publication of application: 24.08.83 Bulletin 83/34

(84) Designated Contracting States: DE FR GB IT NL

(71) Applicant: GENERAL ELECTRIC COMPANY, 1 River Road, Schenectady New York 12305 (US)

(72) Inventor: Haaf, William Robert, 19 Scotch Pine Drive, Voorheesville New York 12186 (US)

(74) Representative: Schüler, Horst, Dr. et al, Kaiserstrasse 41, D-6000 Frankfurt/Main 1 (DE)

(54) **Composition of PPE, HIPS and styrene/butadiene/caprolactone terpolymer.**

(57) Thermoplastic admixtures of polyphenylene ether resin, rubber modified high impact polystyrene and block terpolymer of styrene, butadiene and caprolactone are described. The terpolymer imparts greater impact strength to the composition without prohibitively large increases in the melt viscosity.

EP 0 086 448 A1

ACTORUM AG

10159-8CN-3406

# Composition of PPE, HIPS and Styrene/Butadiene/Caprolactone Terpolymer

## BACKGROUND OF THE INVENTION

The polyphenylene ether (also known as polyphenylene oxide) resins are a well known family of engineering plastics capable of being extruded, molded or otherwise shaped into articles of various shapes and sizes. A number of these resins and methods for their preparation are disclosed by Allan Hay in U.S. Patent Nos. 3,306, 874 and 3,306,875, and by Gelu Stamatoff in U.S. Patent Nos. 3,257,357 and 3,257,358.

It is known from Cizek, U.S. Patent No. 3,383,435, and elsewhere, that polyphenylene ethers are admixable with polystyrene to form blends having good properties.

It is well known that block copolymers of styrene and butadiene in particular can be used as additives to significantly increase the impact resistance of polyphenylene ether/polystyrene. An undesirable result, however, is that the melt viscosity of the resultant composite is also increased which makes processing into the molded article more difficult.

## INTRODUCTION TO THE INVENTION

The discovery has now been made that a block copolymer of styrene, butadiene and caprolactone, a polar material, can effectively improve the impact resistance of blends comprising polyphenylene ether resin and rubber modified high impact polystyrene, without resulting in prohibitively large increases in the melt viscosity of the resultant composition.

## DESCRIPTION OF THE INVENTION

The polyphenylene ether (oxide) resins useful in accordance with the present compositions are well known and readily available.

The preferred polyphenylene ethers are homo- and copolymers of the formula:

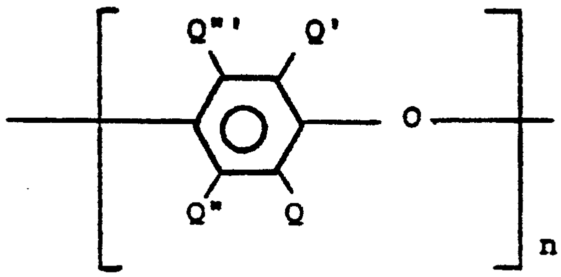

wherein Q, Q', Q" and Q"', are independently selected from the group consisting of hydrogen, hydrocarbon radicals, halohydrocarbon radicals having at least two carbon atoms between the halogen atom and the phenol nucleus, hydrocarbonoxy radicals and halohydrocarbonoxy radicals having at least two carbon atoms between the halogen atoms and the phenol nucleus, and Q', Q" and Q"' in addition may be halogen with the proviso that Q and Q' are preferably free of a tertiary carbon atom; and n represents the total number of monomer residues and is an integer of at least 50.

Especially preferred is poly(2,6-dimethyl-1,4-phenylene) ether.

As previously stated, the compositions of the invention also contain a rubber modified high impact polystyrene. The term "rubber modified high impact polystyrene" is used throughout this disclosure in its conventional sense to refer to a recognized family of well known materials. An example is Amoco's A6H6 grade of HIPS.

Although widely variant proportions of polyphenylene ether and polystyrene are known, the present kinds of compositions preferably contain these ingredients in amounts of from 4:1 to 1:4 of polyphenylene ether: rubber modified high impact polystyrene.

Special mention is made here of rubber modified high impact polystyrene containing rubber particles which are relatively small in size. Materials of this type are disclosed, for instance, in U.S. Patent No. 4,128,602 to Katchman and Lee, Jr.

The compositions will also include as an impact modifier a block terpolymer of styrene, butadiene and caprolactone, obtained from Phillips Petroleum Company. These terpolymers can be prepared by following known procedures.

The amount of this material in the compositions is not critical and can vary widely. Preferred are amounts in the range 5 to 45 parts, based on the weight of the resins. However, best results are usually achieved using from 10 to 30, and especially from 15 to 25 parts, based on the total weight of the combined resinous ingredients.

Other ingredients can also be present. These are typically non-resinous additives or agents which are customarily present in polyphenylene ether resin molding compositions to improve certain other physical and chemical properties. Such additives include, by way of illustration, flame retardants, drip retardants, strengthening fibers (such as glass filaments and graphite whiskers), mineral fillers/reinforcements, dyes, pigments, plasticizers, antioxidants, and processing aids.

The supplementary non-resinous agents are usually added in minor, but effective, amounts ranging from 1% to 50%, based on the total composition.

The compositions can be prepared by any one of a number of procedures. In one procedure the components are dry blended, as in a blender or mechanical stirrer, the blend is fed through a single or twin screw extruder, the extrudate is ground, cut or chopped into pieces of the desired size which are then molded on an injection device.

The invention is further illustrated in the following examples. These are intended as preferred embodiments which are not to be construed as limiting. Amounts are in parts by weight unless otherwise specified.

EXAMPLES 1-9

Compositions in accordance with the invention were prepared comprising poly(2,6-dimethyl-1,4-phenylene ether) resin (PPO®, General Electric Co., intrinsic viscosity = 0.49 dl/g measured in chloroform at 30°C.), rubber modified high impact polystyrene (Amoco's A6H6 grade of small-rubber-particle HIPS), and a polar block terpolymer of styrene, butadiene and caprolactone (Phillips Petroleum) in the amounts noted below.

The ingredients were pre-blended, then extruded on a Werner-Pfleiderer 28 mm twin screw extruder set at 550°F. and vented to a vacuum equivalent to 10 inches of mercury. Molding for compositions 1,2, 3, 4 and 5 was accomplished using a 4 oz. Newbury injection molding machine, 540°F. barrel temperature and 240°F. mold temperature. Compositions 6, 7, 8 and 9 were molded on the same machine using a barrel temperature of 560°F.

and a mold temperature of 240°F.

For comparison purposes, corresponding compositions were prepared using a radial block copolymer of styrene and butadiene (Phillips Petroleum's Solprene® 411) in place of the polar terpolymer of styrene, butadiene and caprolactone. These were molded under the same conditions.

The test results are set forth in the Table below.

TABLE (Compositions)

| Compositions | PPO | A6H6 | Terpolymer | S411 |
|---|---|---|---|---|
| 1 | 30 | 65 | 5 | -- |
| 1A* | 30 | 65 | -- | 5 |
| 2 | 30 | 60 | 10 | -- |
| 2A* | 30 | 60 | -- | 10 |
| 3 | 30 | 55 | 15 | -- |
| 3A* | 30 | 55 | -- | 15 |
| 4 | 30 | 50 | 20 | -- |
| 4A* | 30 | 50 | -- | 20 |
| 5 | 30 | 45 | 25 | -- |
| 5A* | 30 | 45 | -- | 25 |
| 6 | 30 | 40 | 30 | -- |
| 6A* | 30 | 40 | -- | 30 |
| 7 | 30 | 35 | 35 | -- |
| 7A* | 30 | 35 | -- | 35 |
| 8 | 30 | 30 | 40 | -- |
| 8A* | 30 | 30 | -- | 40 |
| 9 | 30 | 25 | 45 | -- |
| 9A* | 30 | 25 | -- | 45 |

TABLE (Properties)

| Composition | HDT | MV at 540°F. 100 $sec^{-1}$ | MV at 540°F. 1500 $sec^{-1}$ | Izod | Gardner | Tensile %E | Tensile Yield | Tensile Break |
|---|---|---|---|---|---|---|---|---|
| 1 | 229 | 8,500 | 1,450 | 4.2 | 140 | 66 | 7,100 | 6,700 |
| 1A* | 229 | 8,700 | 1,600 | 3.9 | 130 | 50 | 7,100 | 6,600 |
| 2 | 236 | 8,200 | 1,650 | 4.8 | 150 | 53 | 6,900 | 6,500 |
| 2A* | 236 | 10,000 | 1,800 | 4.0 | 160 | 71 | 7,000 | 6,700 |
| 3 | 234 | 9,200 | 1,800 | 6.2 | 180 | 76 | 6,600 | 6,400 |
| 3A* | 236 | 10,500 | 1,900 | 4.7 | 200 | 72 | 6,500 | 6,300 |
| 4 | 237 | 9,500 | 1,750 | 6.7 | 190 | 73 | 6,200 | 6,100 |
| 4A* | 236 | 12,500 | 2,250 | 5.8 | 170 | 62 | 6,200 | 6,100 |
| 5 | 236 | 12,000 | 2,050 | 6.5 | 160 | 77 | 5,800 | 5,800 |
| 5A* | 235 | 14,500 | 2,400 | 6.4 | 140 | 69 | 5,400 | 5,600 |
| 6 | 233 | 14,500 | 2,350 | 5.3 | 130 | 58 | 5,400 | 5,400 |
| 6A* | 232 | 16,000 | 2,600 | 3.9 | 140 | 69 | 5,300 | 5,700 |
| 7 | 228 | 15,500 | 2,400 | 4.9 | 120 | 65 | 4,900 | 5,100 |
| 7A* | 235 | 19,000 | 2,900 | 4.4 | 130 | 69 | 4,800 | 5,500 |
| 8 | 228 | 17,000 | 2,450 | 4.6 | 100 | 56 | 4,700 | 4,900 |
| 8A* | 234 | 22,000 | 3,200 | 4.0 | 115 | 56 | 4,600 | 5,100 |
| 9 | 232 | 18,500 | 2,700 | 5.1 | 100 | 51 | 4,300 | 4,400 |
| 9A* | 231 | 23,500 | 3,350 | 4.4 | 100 | 48 | 4,500 | 4,900 |

 

In the foregoing Table, the symbols are further explained as follows:

The asterisk (*) indicates the comparative compositions.

HDT = heat deflection temperature (°F.) under 264 psi fiber stress, using a 1/8" x 1/2" x 2-1/2" specimen in conjunction with ASTM D648 test procedures.

MV = melt viscosity (poise) measured at 540°F. and at shear rates of 100 $sec^{-1}$ and $1500^{-1}$, using an Instron capillary melt rheometer fitted with a capillary of L/D=20.

Izod = notched Izod impact resistance in ft. lbs./in. of notch, using a 1/8" x 1/2" x 2-1/2" specimen in conjunction with ASTM D256 test procedures.

Gardner = Gardner drop-dart impact resistance, using a 3-3/4" x 2-1/2" x 1/8" specimen. Data shown are 50% failure values as determined by the "Bruceton staircase" method.

Tensile elongation (%), yield strength (psi) and strength at break (psi) were determined using a 1/8" x 2-1/2" L-type tensile specimen, ASTM D638.

The above-mentioned patents and/or publications are incorporated herein by reference. Obviously, other modifications and variations of the present invention are possible, in light of the above disclosure. For instance, instead of poly(2,6-dimethyl-1,4-phenylene ether), copolymers such as poly(2,6-dimethyl-co-2,3,6-trimethyl-1,4-phenylene ether) can be used. The compositions can also contain other ingredients such as pigments, flame retardants, antioxidants, plasticizers, fillers, glass fibers, in conventional amounts. It is, therefore, to be understood that changes may be made in the specific embodiments described without departing from the scope of the invention as defined by the appended claims.

CLAIMS:

1. A thermoplastic composition, comprising an admixture of

(a) a blend of a polyphenylene ether resin and a rubber modified high impact polystyrene; and

(b) an impact strength improving amount of a block terpolymer of styrene, butadiene and caprolactone.

2. A composition according to Claim 1, in which the polyphenylene ether is poly(2,6-dimethyl-1,4-phenylene ether) resin.

3. A composition according to Claim 1, in which the polyphenylene ether and polystyrene are present in a weight ratio of from 4:1 to 1:4 polyphenylene ether: polystyrene.

4. A composition according to Claim 1, in which the block terpolymer is present in an amount of from 5 to 45 parts by weight of the total resins.

5. A composition according to Claim 1, in which the block terpolymer is present in an amount of from 10 to 30 parts by weight of the total resins.

6. A composition according to Claim 1, which also includes one or more additives from among flame retardants, mineral fillers/reinforcements, strengthening fibers, plasticizers, antioxidants, pigments, dyes and processing aids.

7. A method of improving the impact strength of a blend of polyphenylene ether resin a rubber modified high impact polystyrene without substantially decreasing the melt viscosity, comprising adding thereto a block terpolymer of styrene, butadiene and caprolactone.

European Patent Office

# EUROPEAN SEARCH REPORT

0086448

Application number

EP 83 10 1207

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-4 258 144 (C.W. CHILDERS et al.)<br>* Claims *<br>----- | 1-7 | C 07 L 71/04<br>C 08 L 53/00<br>C 08 L 87/00 |
| | | | TECHNICAL FIELDS SEARCHED (Int. Cl. 3) |
| | | | C 08 L 71/04<br>C 08 L 53/00<br>C 08 L 87/00 |

The present search report has been drawn up for all claims

| Place of search | Date of completion of the search | Examiner |
|---|---|---|
| THE HAGUE | 11-05-1983 | FOUQUIER J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82